# EUROPEAN PATENT APPLICATION

(11) **EP 4 403 954 A1**
(43) Date of publication of application: **24.07.2024**
(21) Application number: 23216466.5
(22) Date of filing: 13.12.2023
(51) Int. Cl.: G01S 7/481, G01S 7/484, G01S 7/4911, G01S 17/88

(54) **IMPROVEMENTS TO POSITION DETECTION AND NAVIGATION APPARATUS FOR A GUIDED ROBOTIC MACHINE OR VEHICLE**

(30) Priority: 29.12.2022 GB 202219808
(71) Applicant: ExRobotics B.V., 2628 XH Delft (NL)
(72) Inventor: Schreurs, Ronald, 2628 XH Delft (NL); Vercruyssen, Tim, 2628 XH Delft (NL); Verschuure, Pieter, 2628 XH Delft (NL)
(74) Representative: Wood, Graham

(57) **Abstract**

The invention relates to the provision of a robotic machine apparatus, a movement navigation system for said robotic machine and a method of providing guidance for said robotic machine within an environment, and most typically, a confined and potentially hazardous environment. The movement navigation is provided to be operate within the environment and provide guidance remotely from personnel who are located outside of said environment. The apparatus includes means to emit at least one signal through a window of said machine and means to receive a reflected return signal from an object in or a surface of the said environment through said or another window so as to provide data to determine the location of the robotic machine and guide the movement of the machine within the environment. At least one optical lens is provided intermediate the signal transmitting means and window and/or signal receiving means and said window, or another window, in order to allow any distortion caused by the signals passing through said at least one window to be reduced or avoided and thereby allow more accurate guidance of the apparatus.

## Description

The invention to which this application relates is to improvements to apparatus of a robotic form which allows the detection of the position of the apparatus with respect to the surrounding environment and/or with respect to the location of other objects within said environment. In particular, the invention is provided with regard to robotic machines with an autonomous navigation system, such as that utilising a Light Detection and Ranging (LiDAR) navigation system in order to allow the guidance of the robotic machine in an environment which is potentially explosive, with the aim of preventing or minimising the risk of collision of the apparatus with the boundaries of the environment and/or objects positioned within the environment.

The invention is therefore particularly directed to allowing the guidance of movement of the apparatus to be achieved remotely from the potentially explosive environment and thereby reduce the risk of explosion and/or explosion causing a risk of damage to the navigation system.

It is known to provide remote control robotic machines for use in explosive environments and the applicant's patents and applications disclose one form and features of this type of apparatus. Equally, the use of guidance means for movable apparatus such as road vehicles and the like, is well known and typically comprises one or more transmitters of a signal from the apparatus into the surrounding environment in one or more defined directions and one or more receivers provided in the apparatus which detect the return path of the transmitted signal. On the basis of the form in which the returned signal is received, a determination can then be made as to the location of the apparatus and/or other objects within the said environment and by using algorithms and control systems to process the data, allow the intelligent guidance of the movement of the apparatus within the environment so as to, for example, avoid the detected objects.

The guidance system typically includes a protective housing through which the emitted from the emitting means and return signals pass to the receiving means located within the housing. It is found that when the protective housing includes a relatively flat panel or window through which the signals pass, the accuracy of the detection and subsequent location and guidance of the apparatus is relatively high. However, when the surface of the panel or window is curved, the effect of parallax causes distortion and alteration of the paths of the transmitted and received signals which, in turn, reduces the accuracy of the detected location of the apparatus and hence guidance of the apparatus within the environment. These inaccuracies are exacerbated when the guidance apparatus is incorporated into robotic machines which are provided for use in an explosive environment as the window through which the transmitted and received signals are required to pass, is both relatively thick and curved, The increased thickness of the protective window is provided in order to provide protection against explosion but is does mean that the level of inaccuracy of the transmitted and received signals is increased and hence the accuracy of the guidance provided to the robotic machine is reduced to an extent to which the use of the guidance apparatus may not be safely possible.

An aim of the present invention is therefore to provide guidance apparatus in a form which allows the movement of a robotic machine within an environment and/or the detection of other objects within the environment to be enhanced.

A further aim is to provide enhancement of the guidance apparatus in order to allow the same to be effective when used with a robotic machine for use in an explosive environment while, at the same time, ensuring that the protection provided to the guidance apparatus is sufficient whilst allowing accurate movement of the robotic machine.

In a first aspect of the invention there is provided A robotic machine apparatus for movement within an environment, said robotic machine including a movement navigation system including at least one signal transmitting means to emit a signal from internally of the apparatus and through a window to the said environment, at least one receiving means located internally of the apparatus to receive a return signal which has passed through said window or another window from an object in and/or a surface of said environment, and signal processing means to allow the said received signal to be processed and used to determine the position of the robotic machine with respect to said object and/or surface of said environment and so allow the guidance of the movement of said apparatus and wherein, at least one corrective optical lens is positioned intermediate the said at least one transmitting means and said window and/or intermediate said window and said receiving means.

Typically, the corrective lens is provided to correct or at least reduce any distortion of the transmitted and /or received signals which is caused by the passage of the transmitted and/or received signal passing through the said window. This, in turn, means that the accuracy of the signal processing is improved and, in turn the accuracy of the location detection of the robotic machine and resultant guidance remote control of the robotic machine is improved.

Typically the said transmitted signal is a laser beam.

Typically, the said window has internal and external surfaces and one or both are curved.

In one embodiment the said window is cylindrical with a longitudinal axis which is co-planar with a centre axis of a head in which, in one embodiment, the transmitter, receiver and corrective lens are located and about which the same can rotate.

In one embodiment the said movement navigation system is an autonomous navigation system and in one embodiment is a LiDAR guidance apparatus and system. In one embodiment the head is part of the LiDAR apparatus.

Typically the said window is provided to locate within the apparatus so that the head is located behind the said window.

In one embodiment the said window is formed of first and second layers. In one embodiment the first layer acts as an infra-red band pass filter window and the second layer is provided as a protective layer so as to minimise the risk of damage to the window.

Typically the first layer forms the internal surface of the window and the second layer forms the external face of the window.

In one embodiment the first and second layers are separated by an air gap.

In one embodiment the said corrective lens are cylindrical lens. Preferably the lens are plano-convex cylindrical correction lenses.

In one embodiment a first corrective lens is provided for the signal transmission and a second corrective lens is provided for the signal receipt. Alternatively one corrective lens is positioned so as to be used for both the signal transmission and receiving means.

In one embodiment further optical lens are provided such that there is a further lens provided between the signal transmitting means and a said corrective lens and a further lens provided between said optical corrective lens and the signal receiving means. Typically the said at least one corrective lens is positioned intermediate any said further lens and said window.

In one embodiment the said head is provided with a counterweight, typically at the opposing side of the head from that on which the correction lens are located. The weight of the counterweight is typically selected to counter the weight of the corrective lens and thereby ensure uniform rotation of the head when in use.

Typically the robotic machine includes the autonomous navigation apparatus which is connected to control of a drive means connected to a plurality of wheels or rollers to enable the robotic machine to travel across a surface of the environment and the control means allow the guidance of the robotic machine to occur with reference to the data from the autonomous navigation apparatus as herein described.

In a further aspect of the invention there is provided a movement navigation system to allow the remote control of the movement of a robotic machine within an environment, said system including at least one signal transmitting means to emit a signal from internally of said robotic machine and through a window to the said environment, at least one receiving means to receive a return signal internally of said robotic machine and which signal has passed through said window or another window from an object in and/or a surface of said environment, and signal processing means to allow the said received signal to be processed and used to determine the position of the robotic machine with respect to said object and/or surface of said environment and wherein, at least one corrective lens is positioned intermediate the said at least one transmitting means and said window and/or between said window and said receiving means.

In a further aspect of the invention there is provided a method for the remote control of the movement of a robotic machine within an environment, said method comprising the steps of emitting a signal from signal transmitting means located within said machine and through a window to the said environment, at least one receiving means located within the machine to receive a return signal and which signal has passed through said window or another window from an object in and/or a surface of said environment, and processing said received signal to determine the position of the robotic machine with respect to said object and/or surface of said environment and positioning at least one corrective lens intermediate the said at least one transmitting means and said window and/or between said window and said receiving means.

Specific embodiments are now described with reference to the accompanying drawings; wherein
Figure 1 illustrates a form of the guidance head to which the invention relates in a conventional form;
Figure 2 illustrates the head of Figure 1 in a housing of a robotic machine of a type to which the invention relates;
Figures 3a and 3b illustrate in a schematic manner conventional apparatus and the inaccuracy which is caused when the same is used with a robotic machine of the type to which the invention relates;
Figures 4a and b illustrates in a schematic form the arrangement of the head in accordance with two embodiments of the invention;

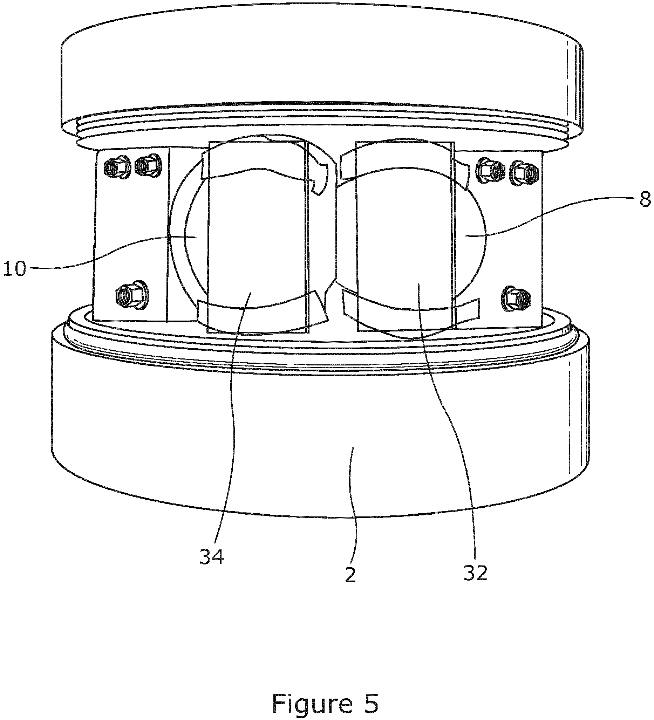

Figure 5 illustrates a head adapted for use in accordance with one embodiment of the invention; and
Figure 6 illustrate a robotic machine of a type with which the invention can be utilised.

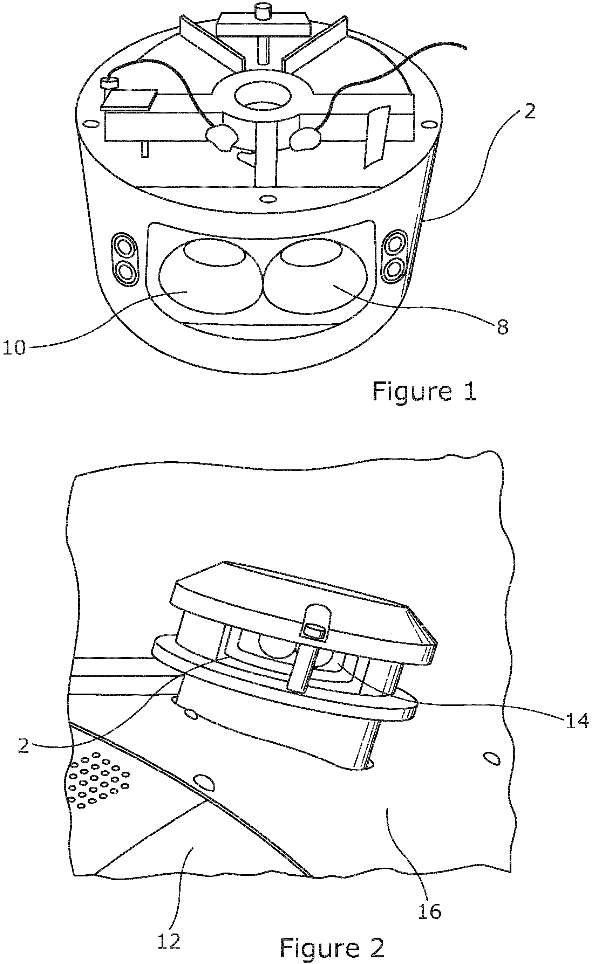

Figure 1 illustrates a movement navigation system of the type which is improved in accordance with the invention. The system illustrated is of the type known as LiDAR and shows a partially disassembled head 2, in which there is provided a laser beam signal transmission means 4, and a receiving means in the form of a detector 6 for receiving a reflected return signal (illustrated and discussed later). A first optical lens 8 is provided through which the laser beam signal is transmitted to the external environment and a second optical lens 10 is provided through which the reflected signal passes from the external environment to the receiver 6. The transmitted and received signals pass through one or more windows 14.

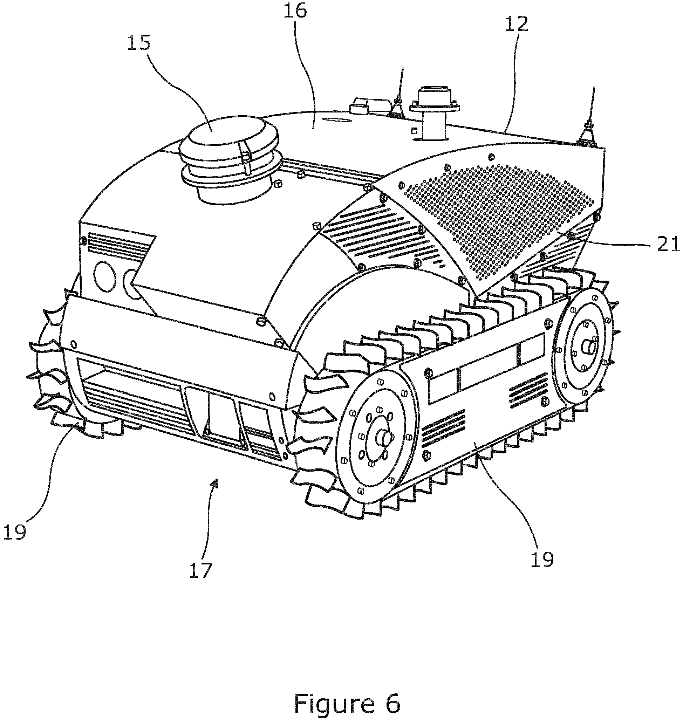

The robotic machines 12 to which the current invention is particularly related are provided for use in environments to perform inspection of apparatus and equipment located within the environment which may contain flammable liquids and gasses such that the robotic machines are required to be explosion safe and have ATEX, the name commonly given to the two European Directives for controlling explosive atmospheres which are Directive 99/92/EC and Directive 2014/34/EU and/or similar certification. One form of robotic machine 12 is illustrated in Figure 6. The head 2 for the guidance system is typically located within a 9.5mm thick cylindrical borosilicate protection window 14, in a housing 15 shown in Figure 6 and part of which is shown in Figure 2, which illustrates the top surface 16 of the robotic machine and shows how the head 2 and surrounding window 14 and housing 15 project upwardly in a turret like fashion from the top surface 16. Also located within the body 21 of the robotic machine is control circuitry, movement means 19 such as wheels or tracks and a drive means such as one or more motors to allow steering and driven movement of the robotic machine to move around the environment surface 17 in a controlled manner. The body may also contain one part of a power cell charging assembly to charge the power cells located within the body and an example of this type of apparatus is disclosed in the applicant's patent NL2019636, the contents of which are incorporated herein by reference.

Thus, the aim is to allow the robotic machine or vehicle , once placed within the environment, to be autonomously operable within the environment and, furthermore, to be operable for a significant period of time during which the power cells may be charged multiple times and therefore avoid, as much as possible, exposure of personnel to the environment in which the vehicle is used. Whilst in the environment, the vehicle can be used to perform routine and/or emergency maintenance and other tasks using a selective range of facilities which may be provided on the body and the particular range of facilities provided on the body may be selected with regard to the specific environment, such as oil and/or gas supply environments in which the same is to be operated. Thus, robotic machines or vehicles of this type can be of significant advantage.

It is therefore imperative, for the successful operation of the automated detection means, that accurate feedback of the location is always provided.

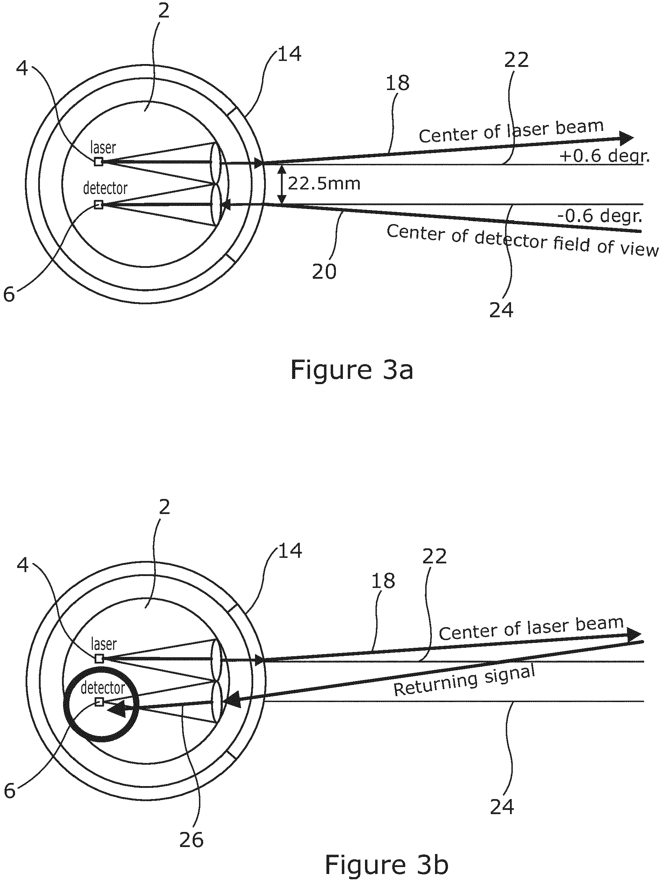

It is found that in practice, the provision of the protective window 14 causes a variation in the transmitted and/or received signals of the guidance apparatus which can cause the distortion discussed above to be created and this is illustrated in Figures 3a and b which show a plan view of the head 2 and window 14. In Figure 3a it is shown how in the conventional apparatus the thick walls of the circular window 14 effectively act as a negative lens and causes displacement of the transmitted laser beam 18 and the detector field of view 20 as the window is causing them to change to point to a different angular direction when passing through the window, It is found that the deviation of both beams can be, for example, 0.6 degrees with respect to respective central axes 22, 24, leading to a total angular separation of 1.2 degrees between laser signal 18 and detector field of view 20.

As a result of this deviation, the detector 6 is unlikely to always be able to detect the reflection 26 of the laser beam 18 and an example of this is shown in Figure 3b, as the reflection 26 falls outwith the field of view 20 due to the misalignment in position of the reflected signal. This is a problem for both longer and shorter detection distances as the deviation of 1.2 degrees is much larger than the angular resolution of the movement navigation system which is typically ~0.2 degree.

In accordance with the invention as now claimed, this problem is solved by the provision of at least one but preferably two corrective lens to the detector head 2 to compensate for the effect of the window 14.

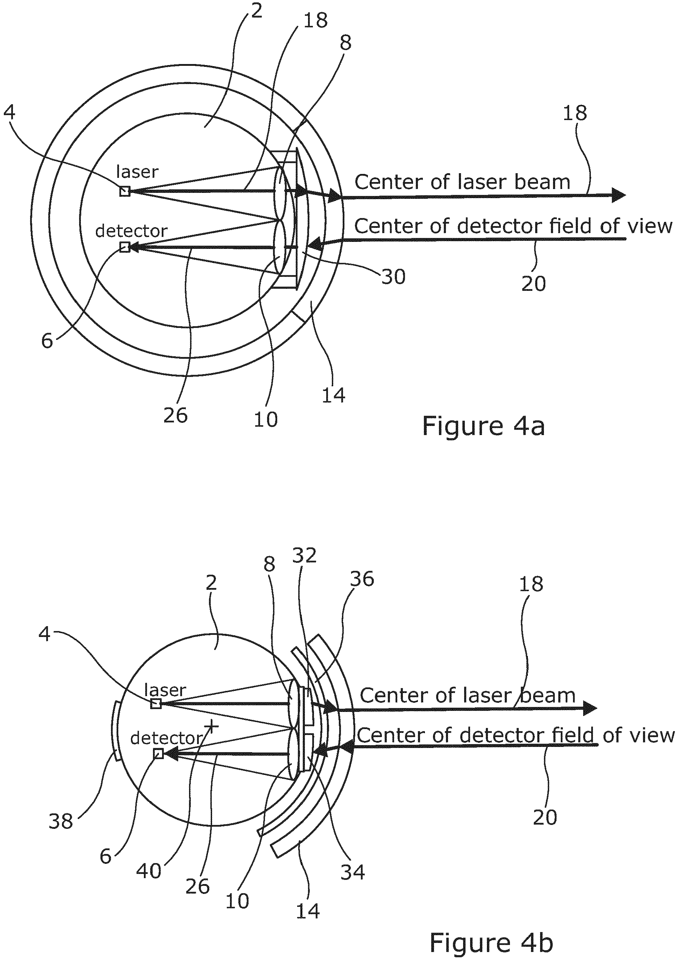

In Figure 4a this is achieved by the provision of a corrective lens which in this embodiment, is in the form of a confocal lens 30 which is added to the head and is located intermediate the existing lens 8,10 and the window 14 as illustrated. It should be noted that the window may act as, or include an IR band pass filter window 36 as illustrated in Figure 4b or alternatively can be a protective window adapted for use with the apparatus for use with robotic machines and which may be formed of a hard wearing and preferably blast resistive material such as borosilicate or another material or materials.

In Figure 4b another solution is shown and this includes the provision of corrective lens 32, 34, with lens 32 provided intermediate the optical lens 8 for the laser beam 18 so that the beam now passes through the lens 8 and lens 32 before passing through the optionally provided IR band pass filter window 36 and the protective window 14 and the corrective lens 34 is located such that the reflected laser beam signal 26 passes through the window 14, the optionally provided IR band pass filter window 36, the corrective lens 34 and then lens 10 before reaching the detector 6.

It is shown that in both of these embodiments the reflected beam signal 26 is now within the area of vision of the detector 6 and so accurate determination of the received reflected signal 26 can be processed and accurate guidance provided to the movement of the robotic machine using the conventional guidance methodology of the LiDAR or another guidance system.

These arrangements are illustrated on a head 2 of the type shown in Figure 1 but adapted in accordance with the schematic arrangement shown in Figure 4b. A counter weight 38 is provided on the opposing side of the head 2 from the lens 32,34 so as to balance the weight of the head and allow smoother and balanced rotation of the same about centre axis 40.

Tests were undertaken to determine the measurement of the maximum intensity and maximum detection distance and this was performed in the following 3 configurations:
1. LiDAR with IR band pass filter window 36, without corrective lenses (+IR, no lenses);
2. LiDAR with IR band pass filter window 36, with lenses 32, 34 attached (+IR, with lenses);
3. LiDAR without IR band pass filter window, with lenses 32,34 attached (-IR, with lenses)

In all 3 above configurations, measurements were done without the borosilicate window 14 and with the borosilicate window 14.

### Maximum intensity and distance measurements

The results are summarized in table 1 (outside environment) and table 2 (inside environment). The values in the table are indicative averages and can vary typically by around 15%.

**Table 1. Maximum signal strength and distance measured with outside environment (from window)**

| | Maximum signal strength | | Maximum distance | |
|---|---|---|---|---|
| | No window | With window | No window | With window |
| Config1 (+IR, no lenses) | 130 | 30 | 80 | 20 |
| Config2 (+IR, with lenses) | 125 | 125 | 60 | 60 |
| Config3 (-IR, with lenses) | 70 | 150 | 33 | 80-100 |

Table 1 clearly shows that the corrective optics lens 32, 34 have the best results without the IR filter 36 present. However the lens correction does also give a significant improvement with the IR filter 36 in place. With corrective optics present, the performance of the LiDAR without the borosilicate window present drops off, because the corrective effect of the lenses works against this configuration.

**Table 2. Maximum and average signal strength measured in inside environment (room)**

| | Maximum signal strength | | Average signal strength | |
|---|---|---|---|---|
| | No window | With window | No window | With window |
| Config1 (+IR, no lenses) | 130 | 30 | 80 | 20 |
| Config3 (-IR, with lenses) | 140 | 140 | 40 | 100 |

In Table 2, it is shown that that the average signal increases also significantly by the corrective lenses 32, 34 when the borosilicate window 14 is present in this distance range.

Thus the use of cylindrical correction lenses 32, 34 improves the guidance system sensitivity significantly when used in combination with thick cylindrical glass windows. If the correction lenses are separated over several mm, then it will be better to use a lens with a shorter focal length and also for a system that uses a combination of an IR- filter window 36 and a Borosilicate window 14. It should also be noted that although reference is made to the window 14 being made of Boroslicate, other materials or combinations of material may be used to provide the same or a similar effect. Furthermore although the reference is made to the use of the invention with the LiDAR navigation system, the invention may be used to provide the same or similar advantages when utilised with autonomous navigation systems other than LiDAR.

The invention therefore provides a robotic machine apparatus, a movement navigation system for said robotic machine and a method of providing guidance for said robotic machine within an environment, and most typically, a confined and potentially hazardous environment. The movement navigation is provided to be operate within the environment and provide guidance remotely from personnel who are located outside of said environment. The apparatus includes means to emit at least one signal through a window of said machine and means to receive a reflected return signal from an object in or a surface of the said environment through said or another window so as to provide data to determine the location of the robotic machine and guide the movement of the machine within the environment. At least one optical lens is provided intermediate the signal transmitting means and window and/or signal receiving means and said window, or another window, in order to allow any distortion caused by the signals passing through said at least one window to be reduced or avoided and thereby allow more accurate guidance of the apparatus.

## Claims

1. A robotic machine apparatus for movement within an environment, said robotic machine including a movement navigation system including at least one signal transmitting means to emit a signal from internally of the apparatus and through a window to the said environment, at least one receiving means located internally of the apparatus to receive a return signal which has passed through said window or another window from an object in and/or a surface of said environment, and signal processing means to allow the said received signal to be processed and used to determine the position of the robotic machine with respect to said object and/or surface of said environment and so allow the guidance of the movement of said apparatus and wherein, at least one corrective optical lens is positioned intermediate the said at least one transmitting means and said window and/or intermediate said window and said receiving means.

2. Apparatus according to claim 1 wherein further optical lens are provided and positioned between the said transmission means and corrective lens and between the said receiving means and corrective lens.

3. Apparatus according to any of the preceding claims wherein the said at least one corrective lens is a cylindrical lens.

4. Apparatus according to claim 3 wherein the said at least one corrective lens is a plano-convex cylindrical correction lens.

5. Apparatus according to claim 2 wherein a said corrective lens is provided and located between the said further optical lens for the transmission means and said window and the same or a further corrective lens is provided and located between said further optical lens for the receiving means and said window.

6. Apparatus according to any of the preceding claims wherein the said transmitted signal is a laser beam.

7. Apparatus according to any of the preceding claims wherein the said window has internal and external surfaces and at least one of which is curved.

8. Apparatus according to any of the preceding claims wherein the said at least one window is formed with at least first and second layers with the first, internal, layer provided as an infrared bandpass filter and the second, external, layer provided as a protective layer.

9. Apparatus according to claim 8 wherein the first and second layers are separated by an air gap.

10. Apparatus according to any of the preceding claims wherein a head is located internally of the said apparatus and any or any combination of the transmitting means, receiving means and/or optical lens are located on the said head.

11. Apparatus according to claim 10 wherein the said at least one window is cylindrical with a centre axis which is coplanar with a centre axis of said head and the said transmitting means, receiving means, head and/or optical lenses are rotatable about said centre axes.

12. Apparatus according to any of the claims 10-11 wherein the said head is provided with a counterweight located at the opposing side of the head from that on which the said optical lens are located.

13. Apparatus according to any of the preceding claims wherein the movement navigation system is connected to control drive means connected to a plurality of wheels or rollers to enable the guided travel of the apparatus across a surface of the said environment and allow the control and guidance of the movement to be performed remotely from the location of said apparatus.

14. Apparatus according to any of the preceding claims wherein the movement navigation system is a Light Detection and Ranging (LiDAR) navigation system.

15. A movement navigation system to allow the remote control of the movement of a robotic machine within an environment, said system including at least one signal transmitting means to emit a signal from internally of said robotic machine and through a window to the said environment, at least one receiving means to receive a return signal internally of said robotic machine and which signal has passed through said window or another window from an object in and/or a surface of said environment, and signal processing means to allow the said received signal to be processed and used to determine the position of the robotic machine with respect to said object and/or surface of said environment and wherein, at least one corrective lens is positioned intermediate the said at least one transmitting means and said window and/or between said window and said receiving means.

16. A method for the remote control of the movement of a robotic machine within an environment, said method comprising the steps of emitting a signal from signal transmitting means located within said machine and through a window to the said environment, at least one receiving means located within the machine to receive a return signal and which signal has passed through said window or another window from an object in and/or a surface of said environment, and processing said received signal to determine the position of the robotic machine with respect to said object and/or surface of said environment and positioning at least one corrective lens intermediate the said at least one transmitting means and said window and/or between said window and said receiving means.
